# DEMANDE DE BREVET EUROPEEN

(11) **EP 1 645 994 A1**
(43) Date de publication de la demande: **12.04.2006**
(21) Numéro de dépôt: 04023899.0
(22) Date de dépôt: 07.10.2004
(51) Int. Cl.: G06K 19/07

(54) **Transpondeur passif comprenant un élévateur de tension**

(71) Demandeur: EM Microelectronic-Marin SA, 2074 Marin (CH)
(72) Inventeur: Pardoen, Matthijs, 2525 Le Landeron (CH); Desjeux, Olivier, 2525 Le Landeron (CH)
(74) Mandataire: Surmely, Gérard

(57) **Abrégé**

Le transpondeur passif comprend une antenne (2) connectée à un circuit intégré (6) dont la partie analogique comprend un redresseur de tension passif (8) fournissant une tension redressée (V_{DC1}) et un multiplicateur ou élévateur actif (16) de cette tension redressée qui est formé par une capacité (C2) commutée à relativement basse fréquence, par exemple à 1 MHz, au moyen d'interrupteurs formés par des transistors (18 à 21) commandés à l'aide d'un oscillateur (24).

## Description

La présente invention concerne un transpondeur passif agencé pour recevoir un signal électromagnétique à très haute fréquence, notamment dans le domaine UHF.

En particulier, l'invention concerne un tel transpondeur formé d'une antenne et d'un circuit intégré incorporant les moyens de redressement et de multiplication de la tension du signal alternatif reçu par le transpondeur pour alimenter le circuit logique de ce circuit intégré.

Un transpondeur du type mentionné ci-dessus est présenté en particulier dans l'article « Fully Integrated Passive UHF RFID transponder IC with 16.7- µW minimum RF input power » IEEE Journal of Solid-State Circuits, vol. 38, No 10, October 2003.

Un transpondeur similaire est aussi décrit dans le brevet US 6 549 064.

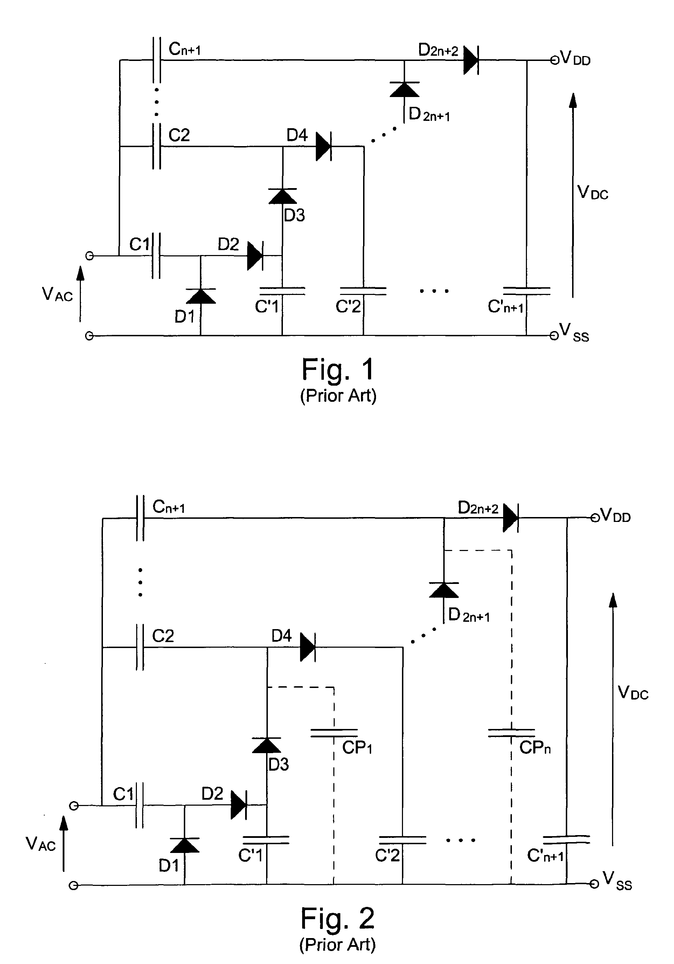

Les moyens de redressement et de multiplication de la tension du signal reçu par le transpondeur divulgués dans l'article susmentionné sont représentés à la Figure 1 ci-jointe. Ces moyens comprennent 2n + 2 diodes en série, n étant le nombre d'étages de multiplication de la tension, ainsi que deux séries de N + 1 capacités, C₁ à Cₙ₊₁ et C'₁ à C'ₙ₊₁, agencées en parallèle de part et d'autre des diodes.

Un tel multiplicateur de tension présente des inconvénients importants qui diminuent la tension de sortie réellement fournie et augmentent la dissipation d'énergie, ce qui limite donc la distance de communication entre un lecteur et le transpondeur.

Le but de la présente invention est de fournir un transpondeur, agencé pour recevoir des signaux à très haute fréquence, en particulier UHF, qui puisse communiquer avec un lecteur ou un émetteur-récepteur, émettant avec une puissance donnée, à une distance supérieure à celle des transpondeurs de l'art antérieur décrits ci-avant.

Dans le cadre du présent développement, les inventeurs ont constaté que la partie analogique du circuit intégré définit une capacité d'entrée qui est couplée à l'antenne inductive. Cette capacité d'entrée et l'antenne forment ensemble un circuit résonnant qui dissipe une certaine énergie proportionnelle à la fréquence du signal électromagnétique reçu. Une antenne présente une certaine ouverture lui permettant de capter une certaine énergie du champ électromagnétique du lecteur arrivant sur cette antenne. L'énergie reçue par le transpondeur est dissipée dans ledit circuit résonnant et également consommée par le circuit intégré. Or, pour un facteur de qualité donné, l'énergie dissipée par le circuit résonnant est proportionnelle à l'énergie stockée dans celui-ci. Cette énergie stockée est égale à 0.5 x C_{E} x V_{P}², C_{E} étant la capacité d'entrée et V_{P} la tension maximale aux bornes de cette capacité d'entrée. Ainsi, pour diminuer l'énergie dissipée, il convient de diminuer C_{E}. Pour V_{P} donné, en diminuant la capacité d'entrée, on peut donc diminuer l'énergie qui doit être captée par l'antenne pour assurer le fonctionnement du transpondeur. C'est ce que se propose la présente invention. Il en résulte une augmentation de la distance de communication entre un lecteur donné et le transpondeur.

On remarquera également que plus la tension V_{P} en entrée est maintenue faible pour une tension redressée déterminée aux bornes du circuit logique du transpondeur, plus la distance de communication peut être grande. L'élévation de tension contribue à obtenir un tel effet. Plus l'élévation de la tension est efficace, plus cette distance de communication est grande.

Les moyens de redressement et de multiplication de la tension du signal reçu tels que proposés dans l'art antérieur de la Figure 1 présente une capacité d'entrée relativement importante due en particulier à la série de capacité C₂ à Cₙ₊₁ qui s'ajoutent à la capacité C₁ d'un circuit redresseur de la tension d'entrée.

Ensuite, les diodes D₃ à D₂ₙ₊₁ sont flottantes avec leur anode ou cathode soumise à un signal alternatif relativement important engendré par le signal RF reçu. Comme représenté à la figure 2, les diodes d'indice impaire D_{2N+1}, N = 1 à n, présentent chacune, dans une intégration monolithique CMOS standard, une capacité parasite CP_{N} avec le substrat qui diminue l'élévation de tension au travers de ces diodes. Il en résulte une diminution de l'efficacité de l'élévateur de tension, ce qui est un désavantage majeur.

Pour pallier les inconvénients susmentionnées, la présente invention propose un transpondeur passif comprenant des moyens de redressement et de multiplication de la tension alternative du signal électromagnétique reçu et qui est caractérisé par le fait que ces moyens comprennent un redresseur passif fournissant une tension redressée et un multiplicateur ou élévateur de tension agencé en aval du redresseur passif et formé par des capacités commutées à une fréquence inférieure à ladite fréquence dudit signal reçu.

De préférence, les capacités sont commutées à relativement basse fréquence à l'aide de transistors définissant des interrupteurs actifs.

La présente invention est décrite ci-après à l'aide du dessin annexé, donné à titre d'exemple nullement limitatif, dans lequel :
- les figures 1 et 2, déjà décrites, représentent un redresseur-élévateur de tension implémenté dans un transpondeur passif de l'art antérieur,
- la figure 3 est un schéma électronique partiel d'un mode de réalisation d'un transpondeur selon l'invention,
- la figure 4 est une variante de réalisation du transpondeur de la figure 4,et
- la figure 5 représente deux signaux de commande appliqués au multiplicateur de tension du transpondeur de la figure 3 ou 4.

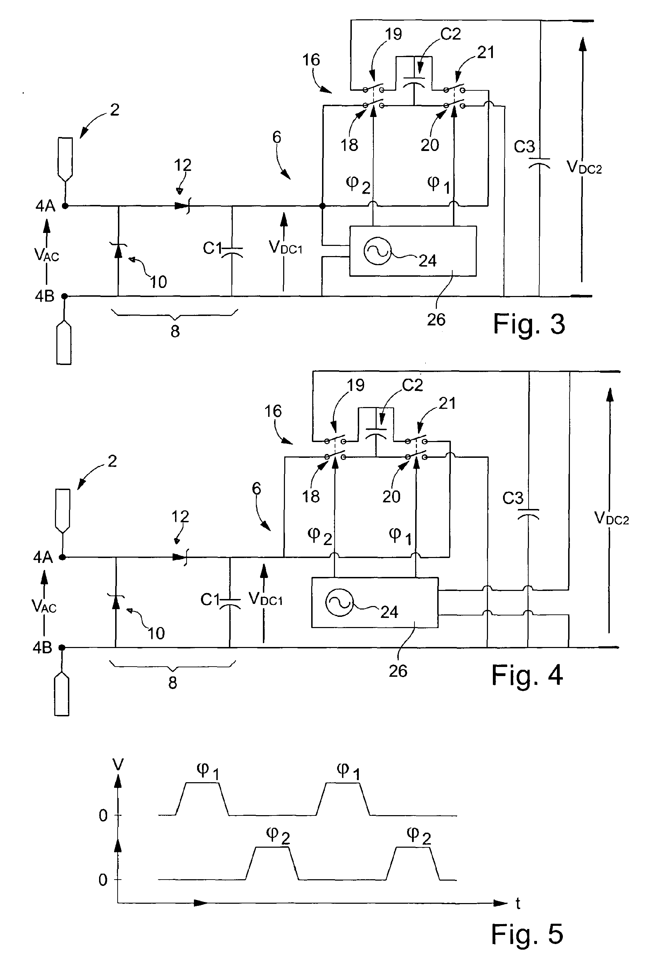

La figure 3 montre une partie analogique du circuit intégré d'un transpondeur passif selon l'invention couplée à une antenne de réception de signaux électromagnétiques engendrant en entrée une certaine tension alternative. Cette partie analogique définit des moyens de redressement et de multiplication de cette tension alternative.

Ce transpondeur comprend une antenne 2 reliées électriquement aux bornes d'entrée 4A et 4B du circuit intégré 6 dont seuls les moyens d'alimentation en tension continue du circuit logique sont représentés. Le circuit 6 comprend un redresseur passif 8 dont les bornes d'entrée sont connectées à l'antenne 2. Ce redresseur 8 comprend de manière classique deux diodes 10 et 12, de préférence des diodes Schottky, et une capacité C1 aux bornes de laquelle on obtient une tension redressée V_{DC1}. En aval du redresseur 8 est agencé le circuit 16 doubleur de la tension continue V_{DC1}. Ce circuit 16 est formé d'une capacité C2 commutée à l'aide de quatre transistors 18, 19, 20 et 21 ainsi que d'une capacité C3 aux bornes de laquelle on obtient la tension V_{DC2} égale sensiblement au double de la tension V_{DC1}.

Les transistors sont actionnés à l'aide de moyens de commande 26 comprenant un oscillateur 24 fonctionnant à basse fréquence. Les transistors 18 à 21 définissent quatre interrupteurs actifs qui sont ouverts et fermés deux à deux en alternance par deux signaux de commande ϕ₁ et ϕ₂ fournis par les moyens de commande 26. Ces signaux de commande ϕ₁ et ϕ₂ sont non superposés, comme montré à la figure 5.

Dans la variante de la figure 4, l'oscillateur ou générateur d'impulsions 24 est alimenté par la tension V_{DC1}. A titre d'exemple, la tension V_{DC2} nécessaire au fonctionnement du circuit logique est d'environ 1 Volt. Ainsi la tension V_{DC1} doit être sensiblement égale à 0.5 Volt. L'homme du métier peut réaliser un générateur d'impulsions ou horloge interne fonctionnant déjà avec une tension d'alimentation d'environ à 0.5 Volt. Ainsi le doubleur de tension actif 16 peut être fonctionnel à la tension minimum prévue pour l'activation du circuit logique du transpondeur puisque l'oscillateur fonctionne avec une tension au moins environ deux fois inférieure à cette tension minimum.

Dans une autre variante de réalisation représentée à la figure 4, les moyens de commande des transistors de l'élévateur de tension comprenant le générateur d'impulsions 24 sont alimentés par la tension V_{DC2} appliquée au circuit logique. Ainsi dans une phase initiale, le multiplicateur fonctionne en mode passif ou les moyens de commande 26 comprennent un circuit de démarrage permettant d'effectuer au moins une première activation des transistors. L'homme du métier sait implémenter de telles variantes de réalisation.

A titre d'exemple, la capacité C2 est commutée à une fréquence d'environ un MHz. L'utilisation de transistors actifs commutés à relativement basse fréquence pour élever la tension redressée du signal reçu par l'antenne permet de diminuer de manière significative la capacité d'entrée du circuit intégré et d'augmenter son facteur de qualité relativement au transpondeur de l'art antérieur décrit précédemment. Ainsi les pertes d'énergie dans la partie analogique du transpondeur sont diminuées et l'élévation de tension est plus efficace. Il en résulte une augmentation de la distance de communication possible entre un tel transpondeur et un lecteur qui lui est associé.

On notera que l'oscillateur prévu pour commander les transistors du doubleur de tension peut avantageusement être l'oscillateur intégré dans le circuit du transpondeur qui est prévu pour cadencer le circuit logique, en particulier dans le cas de la variante de la figure 4.

Le mode de réalisation décrit ci-avant concerne un doubleur de tension actif. On peut prévoir d'autres étages successifs permettant de multiplier chacun la tension par deux. L'homme du métier peut aussi réaliser sur la base du principe décrit ici un tripleur de tension.

## Revendications

1. Transpondeur passif agencé pour recevoir un signal électromagnétique à très haute fréquence, notamment dans le domaine UHF, et comprenant une antenne (2) et un circuit intégré (6) relié à cette antenne, ce circuit intégré comprenant des moyens analogiques pour redresser la tension alternative d'entrée dudit signal électromagnétique reçu et pour multiplier ou élever cette tension alternative d'entrée, ces moyens de redressement et de multiplication alimentant un circuit logique dudit circuit intégré, **caractérisé en ce que** lesdits moyens de redressement et de multiplication ou d'élévation de la tension alternative d'entrée comprennent un redresseur passif (8) fournissant une tension redressée (V_{DC1}) et un multiplicateur ou élévateur de tension actif (16) agencé en aval du redresseur passif, ce multiplicateur ou élévateur de tension comprenant au moins une capacité (C₂) commutée à une fréquence inférieure à ladite fréquence dudit signal reçu.

2. Transpondeur selon la revendication 1, **caractérisé en ce que** ledit multiplicateur ou élévateur de tension (16) comprend des transistors (18 à 21) formant interrupteurs de courant, ces transistors étant commutés à relativement basse fréquence.

3. Transpondeur selon la revendication 1 ou 2 **caractérisé en ce qu'**il comprend un oscillateur (24) intégré dans ledit circuit intégré et servant à cadencer ledit circuit logique et à générer des impulsions de commande dudit multiplicateur ou élévateur de tension.

4. Transpondeur selon l'une des revendications précédentes, **caractérisé en ce que** ledit multiplicateur de tension (16) est un doubleur de ladite tension redressée (V_{DC1}) par ledit redresseur passif (8).
